# EUROPÄISCHE PATENTSCHRIFT

(11) **EP 1 623 797 B1**
(45) Veröffentlichungstag und Bekanntmachung des Hinweises auf die Patenterteilung: **10.01.2007**
(21) Anmeldenummer: 05015180.2
(22) Anmeldetag: 13.07.2005
(51) Int. Cl.: B25B 23/14

(54) **Schrauber**
Screwdriver
Tournevis

(30) Priorität: 04.08.2004 DE 102004038829
(43) Veröffentlichungstag der Anmeldung: 08.02.2006
(73) Patentinhaber: C. & E. Fein GmbH, 73529 Schwäbisch-Gmünd-Bargau (DE)
(72) Erfinder: Scholl, Thomas, 72768 Reutlingen (DE); Greese, Oliver, 70794 Filderstadt (DE)
(74) Vertreter: Gahlert, Stefan

(56) Entgegenhaltungen:
- EP-A- 1 258 321
- US-B1- 6 173 792

## Beschreibung

Die Erfindung betrifft einen Schrauber mit einem Antrieb, der über eine drehmomentabhängig auslösende Kupplung mit einer Werkzeugantriebswelle zum Antrieb eines Werkzeugs gekoppelt ist, mit einer Steuerelektronik zur Steuerung des Antriebs, und mit einem Sensor, der mit der Steuerelektronik gekoppelt ist, um den Antrieb bei Ansprechen der Kupplung abzuschalten. (EP-A-1 258 321).

Derartige Schrauber sind seit längerer Zeit bekannt und werden insbesondere benutzt, um Verschraubungen mit einem präzisen Drehmoment anzuziehen. Ein typischer Anwendungsfall liegt bei der Montage in der Automobilindustrie, wenn zahlreiche Verschraubungen möglichst präzise angezogen werden müssen.

Wenngleich die bekannten Schrauber für die meisten Anwendungsfälle ausreichend sind, so treten doch von den Anwendern häufig Forderungen nach einer noch präziseren Einhaltung des Anzugsmomentes einer Verschraubung auf. Hierbei ist ferner zu berücksichtigen, dass in Abhängigkeit von den jeweiligen Ansatzparametern auch bei gleichen Einstellungen unter Umständen mehr oder minder stark von einem vorgegebenen Sollwert abweichende Anzugsmomente auftreten können.

Vor diesem Hintergrund liegt der Erfindung die Aufgabe zugrunde, einen Schrauber gemäß der eingangs genannten Art derart zu verbessern, dass ein möglichst präzises Anzugsmoment gewährleistet werden kann.

Ferner soll ein Verfahren zum Steuern eines Schraubers angegeben werden, mit dem ein möglichst präzises Anzugsmoment gewährleistet werden kann.

Hinsichtlich des Schraubers wird diese Aufgabe bei einem Schrauber gemäß der eingangs genannten Art dadurch gelöst, dass die Steuerelektronik dazu ausgebildet ist, den Antrieb nach Abschaltung für eine begrenzte Zeit mit einer bestimmten Leistung, vorzugsweise mit einer erniedrigten Leistung, anzusteuern.

Gemäß dem erfindungsgemäßen Verfahren wird die Aufgabe der Erfindung ferner durch ein Verfahren zum Steuern eines Schraubers zum Anziehen einer Schraubverbindung mit einem bestimmten Anzugsmoment mit folgenden Schritten gelöst:
- Bereitstellen einer drehmomentabhängig auslösbaren Kupplung im Antriebsstrang zwischen einem Antrieb und einer Werkzeugantriebswelle zum Antrieb eines Werkzeugs;
- Antreiben der Werkzeugantriebswelle über die Kupplung;
- Überwachen der Kupplung auf ein Auslösen;
- Abschalten des Antriebs bei Auslösen der Kupplung;
- Einschalten des Antriebs mit zum Nachdrehen der Kupplung und
- Abschalten des Antriebs nach einem vorgegebenen Abschaltkriterium.

Die Aufgabe der Erfindung wird auf diese Weise vollkommen gelöst.

Es wurde festgestellt, dass ein präziseres Anzugsmoment bei Verschraubungen erzielt werden kann, wenn der Antrieb nach dem Abschalten nochmals für eine begrenzte Zeit mit einer geringeren Leistung wieder eingeschaltet wird. Damit wird erreicht, dass die Kupplung an einem definierten Ort zum Stehen kommt. Auf diese Weise können Einflüsse ausgeschaltet werden, die durch unterschiedliche Schraubbedingungen, zum Beispiel unterschiedliche Reibungsverhältnisse, bedingt sind. Insbesondere können Unterschiede zwischen einem sogenannten weichen Schraubfall, bei dem das Anzugsmoment allmählich erreicht wird, und einem sogenannten harten Schraubfall, bei dem das Anzugsmoment am Ende der Verschraubung schnell ansteigt, ausgeglichen werden.

Hierbei sollte zweckmäßigerweise durch eine rechtzeitige Beendigung des Nachdrehvorgangs gewährleistet werden, dass der beim Auflösen der Kupplung ausgelöste Kupplungsteil nicht durch den Nachdrehvorgang am anderen Kupplungsteil anschlägt.

Dies kann grundsätzlich auf zwei Arten gewährleistet werden. Zum einen kann die Einschaltung und Wiederabschaltung des Antriebs nach Auslösen der Kupplung zeitgesteuert erfolgen. Andererseits kann der Antrieb winkelabhängig nach Auslösung der Kupplung eingeschaltet und wieder ausgeschaltet werden.

Gemäß der ersten Variante weist die Steuerelektronik in vorteilhafter Weiterbildung der Erfindung somit Mittel zur zeitgesteuerten Einschaltung und Wiederausschaltung des Antriebs nach Auslösung der Kupplung auf.

Gemäß einer weiteren vorteilhaften Variante der Erfindung weist der Schrauber einen Winkelsensor zur Erfassung des Drehwinkels der Werkzeugantriebswelle auf, der mit der Steuerelektronik gekoppelt ist, um den Antrieb winkelabhängig nach Auslösung der Kupplung einzuschalten und wieder auszuschalten.

Obwohl auch die zeitgesteuerte Einschaltung und Wiederausschaltung des Antriebs grundsätzlich zufriedenstellend arbeitet, ist die winkelgesteuerte Ein- und Ausschaltung des Antriebs bevorzugt, da hiermit eine noch präzisere Steuerung erreicht werden kann.

Gemäß einer weiteren Ausgestaltung der Erfindung weist die Steuerelektronik Mittel zur Bremsung des Antriebs nach Auslösen der Kupplung auf.

Hierdurch wird die Gesamtzeit für das Erstellen einer Verschraubung verkürzt und insgesamt ein präziseres Anzugsmoment gewährleistet.

In vorteilhafter Weiterbildung der Erfindung umfasst der Antrieb einen Motor und ein davon angetriebenes Getriebe. Der Winkelsensor kann hierbei als Winkelzähler ausgebildet sein, der unmittelbar mit der Motorwelle gekoppelt ist.

In alternativer Ausführung kann der Winkelsensor hierbei als Winkelzähler ausgebildet sein, der mit einem Ausgang des Getriebes oder mit der Werkzeugantriebswelle gekoppelt ist.

Beide Varianten reichen aus, um eine äußerst präzise Bestimmung der Ein- und Abschaltbedingungen für den Motor zu gewährleisten.

In weiter bevorzugter Ausgestaltung der Erfindung ist die Kupplung als Trennkupplung mit einem einstellbaren Auslösemoment ausgebildet.

Auf diese Weise kann der Schrauber auf verschiedene Anzugsmomente für unterschiedliche Schraubfälle eingestellt werden.

In weiter bevorzugter Ausgestaltung der Erfindung weist die Trennkupplung einen vom Getriebe angetriebenen Nockenring auf, der über erste Rollkörper mit einem Schaltring gekoppelt ist, wobei der Schaltring gegen den Nockenring elastisch vorgespannt ist.

Auf diese Weise wird durch die Rollkörper eine sichere Kraftübertragung über die Kupplung ermöglicht und gleichzeitig einem Verschleiß durch Reibung entgegengewirkt.

Gemäß einer weiteren Ausgestaltung der Erfindung ist der Schaltring über zweite Rollkörper mit der Werkzeugantriebswelle drehfest, aber axial verschieblich gekoppelt, wobei die Rollkörper in Axialführungen des Schaltrings und der Werkzeugantriebswelle geführt sind.

Auf diese Weise wird eine sichere Drehmomentübertragung vom angetriebenen Schaltring auf die Werkzeugantriebswelle ermöglicht, wobei gleichzeitig die notwendige Verschieblichkeit des Schaltrings in Axialrichtung und ein gewisses Spiel vorhanden ist, durch das die Auswirkungen von etwa durch von Toleranzdifferenzen bedingte Kippkräfte ausgeglichen werden können. Der Schaltring ist so mittelbar über die Rollkörper an der Werkzeugantriebswelle fliegend gelagert aber dabei axial verschiebbar.

Gemäß einer weiteren Ausgestaltung der Erfindung ist der Nockenring an einem Gehäuse mittels eines Lagers, insbesondere mittels eines Nadellagers, drehbar gelagert und über dritte Rollkörper an einem Ende der Werkzeugantriebswelle in Axialrichtung abgestützt.

Auf diese Weise werden Reibungskräfte während einer Ausrückbewegung der Kupplung weitgehend vermieden.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der folgenden Beschreibung bevorzugter Ausführungsbeispiele unter Bezugnahme auf die Zeichnungen. Es zeigen:
- Figur 1: Eine schematische Darstellung eines erfindungsgemäßen Schraubers als Blockschaltbild;
- Figur 2: einen Längsschnitt durch einen erfindungsgemäßen Schrauber im Bereich seiner Kupplung mit Werkzeugantriebswelle; und
- Figur 3: eine Darstellung des Drehmomentverlaufs in Abhängigkeit von der Zeit bzw. vom Drehwinkel.

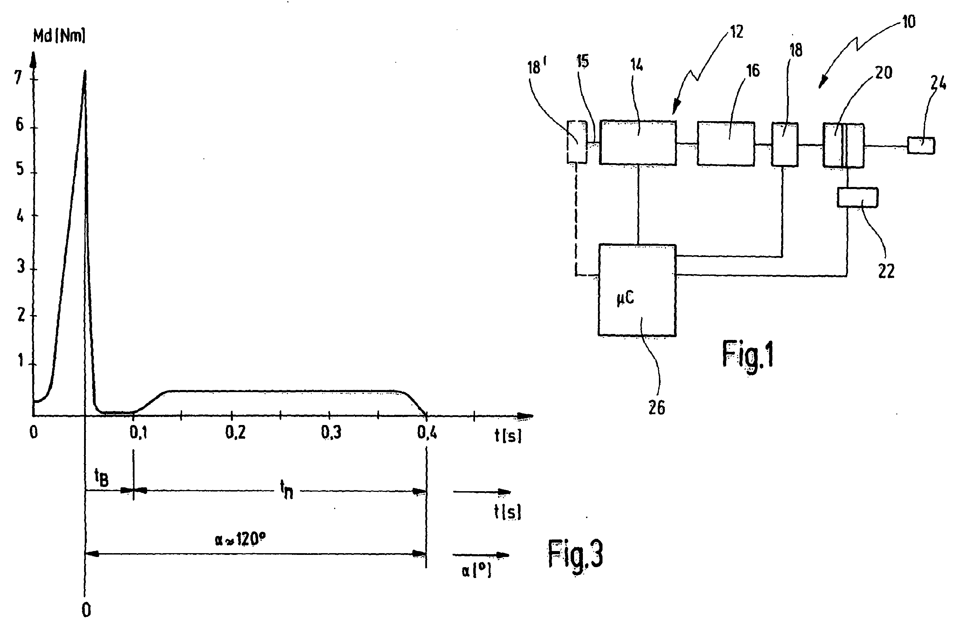

In Figur 1 ist ein erfindungsgemäßer Schrauber äußerst schematisch dargestellt und insgesamt mit der Ziffer 10 bezeichnet.

Der Schrauber 10 weist einen Antrieb 12 auf, der von einem Motor 14 in Form eines EC-Motors und einem davon angetriebenen Getriebe 16 gebildet ist. Am Ausgang des Getriebes 16 befindet sich ein Winkelsensor in Form eines Winkelzählers 18. Vom Getriebe 16 wird ferner eine Kupplung 20 angetrieben, die als aus zwei Hälften bestehende Trennkupplung ausgebildet ist und deren Ausgang mit einer Werkzeugantriebswelle gekoppelt ist, um ein Werkzeug 24 anzutreiben. Ein Sensor 22 dient zur Überwachung des Ausrückens der Kupplung. Zur Steuerung des Schraubers 10 ist eine zentrale, mikroprozessorgesteuerte Steuerelektronik 26 vorgesehen. Diese steuert sämtliche Vorgänge des Schraubers 10.

Der Winkelsensor 18 könnte alternativ auch unmittelbar mit der Motorantriebswelle 15 des Motors 14 gekoppelt sein, wie durch die gestrichelte Darstellung 18' in Figur 1 angedeutet ist.

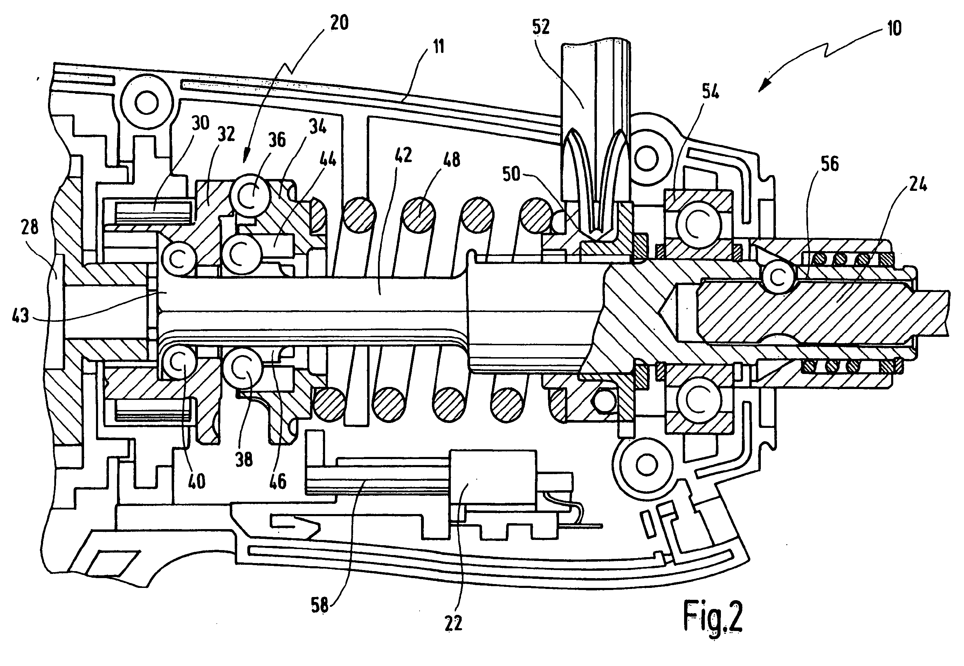

Der Aufbau des Schraubers 10 ist aus der vergrößerten Darstellung gemäß Figur 2 näher zu ersehen. Der Schrauber 10 weist ein hier nicht näher dargestelltes Getriebe 16 auf, dessen Abtrieb 28 mit der Kupplung 20 verbunden ist.

Die Kupplung 20 weist eine erste Kupplungshälfte in Form eines Nockenrings 32 und eine zweite Kupplungshälfte in Form eines Schaltrings 34 auf, zwischen denen erste Rollkörper 36 in Form von Kugeln gehalten sind. Der Nockenring 32 ist außen mittels eines Nadellagers 30 am Gehäuse gelagert und drehfest mit dem Abtrieb 28 des Getriebes 16 verbunden. Der Nockenring 32 stützt sich in Axialrichtung an Rollkörpern 40 in Form von Kugeln an einem Ende der Werkzeugantriebswelle 42 ab. Auf diese Weise wird eine vom Schaltring 34 über die Kugeln 36 auf den Nockenring 32 übertragene Axialkraft aufgenommen.

Das Antriebsmoment wird vom Nockenring 32 über die Kugeln 36 auf den Schaltring 34 übertragen, der drehfest mit der Werkzeugantriebswelle 42 verbunden ist. Der Schaltring 34 ist gegenüber dem Nockenring 32 axial beweglich. Zur drehfesten Verbindung mit der Werkzeugantriebswelle 42 dienen zweite Rollkörper 38 in Form von Kugeln, die in zugeordneten Axialführungen 44 und 46 des Schaltrings und der Werkzeugantriebswelle 42 geführt sind. So ist der Schaltring 34 drehfest mit der Werktriebswelle 42 verbunden, jedoch um einen gewissen Betrag gegenüber dem Nockenring 32 axial beweglich. Der Schaltring 34 ist durch eine Feder 48 in Form einer Schraubenfeder gegen den Nockenring 32 vorgespannt. Die Feder 48 ist zwischen dem Schaltring 34 und einem Stellring 50 auf der gegenüberliegenden Seite gehalten. Die Vorspannkraft der Feder 48 ist mittels des Stellrings 50 über ein Stellelement 52 einstellbar, um das Auslösemoment der Kupplung 20 einstellen zu können.

Die Werkzeugantriebswelle 42 ist an ihrem nach außen hin weisenden Ende durch ein Kugellager 54 am Gehäuse 11 gelagert und weist eine Werkzeugaufnahme 56 auf, in die ein Werkzeug 24 in bekannter Weise eingesetzt und drehfest fixiert werden kann.

Die Kupplung 20 weist insgesamt drei Rollkörper oder Kugeln 36 auf, die in gleichmäßigen Winkelabständen von 120 Grad zwischen zugeordneten, schrägen Führungsflächen des Nockenrings 32 und des Schaltrings 34 gehalten sind. Wird das durch die Feder 48 vorgegebene Ausrückmoment der Kupplung 20 überschritten, so bewegen sich die Rollkörper oder Kugeln 36 entlangen der schrägen Führungsflächen des Schaltrings 34. Dadurch wird der Schaltring 34 durch die Rollkörper der Kugeln 36 in Richtung nach außen axial verschoben.

Die Ausrückbewegung des Schaltrings 34 wird durch den Sensor 22 überwacht. Der Sensor 22, der grundsätzlich beliebig aufgebaut sein kann, zum Beispiel als induktiver Sensor, ist im vorliegenden Fall einfach als mechanischer Schalter ausgebildet, der bei Betätigung einen Schaltkontakt öffnet. Der Sensor 22 weist eine Schaltstange 58 auf, die bei Auslösen der Kupplung 20 durch die Axialverschiebung des Schaltrings 34 betätigt wird.

Die Funktion des erfindungsgemäßen Schraubers wird nunmehr anhand von Figur 3 näher erläutert.

Auf der Ordinate von Figur 3 ist das Drehmoment Md (in Nm), das auf das Werkzeug 24 bei einem Schraubvorgang übertragen wird, aufgetragen. Auf der Abszisse ist die zugehörige Zeit t (in Sekunden) angegeben.

Bei Beginn eines Schraubvorgangs ist das Drehmoment Md zunächst relativ gering. Gegen Ende des Schraubvorgangs läuft die angezogene Schraube jedoch an einem Widerstand auf, und das Drehmoment Md steigt schnell bis auf den Maximalwert an, der im vorliegenden Fall etwa 7 Nm beträgt. Mit Ansteigen des Drehmoments löst auch die Kupplung 20 aus, was vom Sensor 22 erfasst wird. Auf der Zeitachse ist dieser Zeitpunkt, zu dem die Kupplung auslöst, mit Null angegeben. Über die Steuerelektronik wird anschließend eine Bremsung des Motors bewirkt, die sich im dargestellten Beispiel über eine Bremszeit t_{B} von etwa 0,1 Sekunden erstreckt. Nach Beendigung des Bremsvorgangs wird mit der Motor nochmals mit einer geringen Spannung angesteuert, um über einen gewissen Zeitraum ein relativ geringes Nachdrehmoment auf die Verschraubung zu übertragen. Dadurch kommt der Nockenring 32 in einer definierten Lage kurz vor Anschlag am Schaltring 34 zum stehen.

In Figur 3 ist dies durch eine Nachdrehzeit tₙ von etwa 0,2 Sekunden dargestellt, während derer sich zunächst ein Anstieg des Drehmoments bis auf etwa 0,5 Nm ergibt, was bis zum Beendigen des Nachdrehvorgangs konstant bleibt und beim Wiederabschalten des Motors zum Ende der Nachdrehzeit dann bis auf Null abfällt.

Es wurde festgestellt, dass sich ein vorgegebenes Anzugsmoment durch einen derartigen Nachdrehvorgang nach Beendigung der Bremsung besonders präzise einhalten lässt.

Im dargestellten Ausführungsbeispiel weist die Kupplung 20 insgesamt drei Rollkörper oder Kugeln 36 auf, die, um 120 Grad zueinander versetzt, auf schrägen Führungsflächen oder Nockenflächen des Schaltrings 34 geführt sind.

Um ein späteres Wiederansteigen des Drehmoments dadurch zu vermeiden, dass die Kugeln 36 nach dem Ausrückvorgang in der späteren Nachdrehphase an den um 120° versetzten Nocken wieder anschlagen, ist eine rechtzeitige Wiederabschaltung des Motors notwendig.

Da die Zeiten je nach Schraubvorgang etwas differieren können, ist es erfindungsgemäß bevorzugt, anstatt einer grundsätzlich möglichen zeitgesteuerten Abschaltung eine winkelgesteuerte Abschaltung des Motors zu verwenden. Aus diesem Grunde ist gemäß Figur 1 ein Winkelzähler 18 bzw. 18' vorgesehen, mittels dessen die Umdrehungen des Nockenrings 32 oder der Motorwelle ab dem Zeitpunkt der Abschaltung der Kupplung erfasst werden. So kann der Einschaltzeitpunkt und der Ausschaltzeitpunkt des Antriebs bei Beendigung des Nachdrehens winkelgesteuert exakt bestimmt werden.

## Patentansprüche

1. Schrauber mit einem Antrieb (12), der über eine drehmomentabhängig auslösende Kupplung (20) mit einer Werkzeugantriebswelle (42) zum Antrieb eines Werkzeugs (24) gekoppelt ist, mit einer Steuerelektronik (26) zur Steuerung des Antriebs (12), und mit einem Sensor (22), der mit der Steuerelektronik (26) gekoppelt ist, um den Antrieb (12) bei Ansprechen der Kupplung (20) abzuschalten, **dadurch gekennzeichnet, dass** die Steuerelektronik (26) dazu ausgebildet ist, den Antrieb (12) nach Abschaltung für eine begrenzte Zeit mit einer bestimmten Leistung, vorzugsweise mit einer erniedrigten Leistung, anzusteuern.

2. Schrauber nach Anspruch 1, **dadurch gekennzeichnet, dass** die Steuerelektronik (26) Mittel zur zeitgesteuerten Einschaltung und Wiederausschaltung des Antriebs (12) nach Auslösung der Kupplung (20) aufweist.

3. Schrauber nach Anspruch 1, **dadurch gekennzeichnet, dass** ein Winkelsensor (18, 18') zur Erfassung des Drehwinkels der Werkzeugantriebswelle (42) vorgesehen ist, der mit der Steuerelektronik (26) gekoppelt ist, um den Antrieb (12) winkelabhängig nach Auslösung der Kupplung (20) einzuschalten und wieder auszuschalten.

4. Schrauber nach einem der vorhergehenden Ansprüche, **dadurch gekennzeichnet, dass** die Steuerelektronik (26) Mittel zur Bremsung des Antriebs (12) nach Auslösen der Kupplung (20) aufweist.

5. Schrauber nach Anspruch 3, **dadurch gekennzeichnet, dass** der Antrieb (12) einen Motor (14) und ein davon angetriebenes Getriebe (16) umfasst, und wobei der Winkelsensor (18, 18') als Winkelzähler ausgebildet ist, der mit der Motorwelle (15) gekoppelt ist.

6. Schrauber nach Anspruch 3, **dadurch gekennzeichnet, dass** der Antrieb (12) einen Motor (14) und ein davon angetriebenes Getriebe (16) umfasst, und wobei der Winkelsensor (18, 18') als Winkelzähler ausgebildet ist, der mit einem Ausgang des Getriebes (16) oder mit der Werkzeugantriebswelle (42) gekoppelt ist.

7. Schrauber nach einem der vorhergehenden Ansprüche, bei dem die Kupplung (20) als Trennkupplung mit einem einstellbaren Auslösemoment ausgebildet ist.

8. Schrauber nach Anspruch 7, **dadurch gekennzeichnet, dass** die Trennkupplung (20) einen vom Getriebe (16) angetriebenen Nockenring (32) aufweist, der über erste Rollkörper (36) mit einem Schaltring (34) gekoppelt ist, wobei der Schaltring (34) gegen den Nockenring (32) elastisch vorgespannt ist.

9. Schrauber nach Anspruch 8, **dadurch gekennzeichnet, dass** der Schaltring (34) über zweite Rollkörper (38) mit der Werkzeugantriebswelle (42) drehfest, aber axial verschieblich gekoppelt ist, wobei die Rollkörper (38) in A-xialführungen (44, 46) des Schaltrings (34) und der Werkzeugantriebswelle (42) geführt sind.

10. Schrauber nach Anspruch 8 oder 9, **dadurch gekennzeichnet, dass** der Nockenring (32) an einem Gehäuse (11) mittels eines Lagers (30), insbesondere mittels eines Nadellagers, drehbar gelagert ist und über dritte Rollkörper (40) an einem Ende (43) der Werkzeugantriebswelle (42) in Axialrichtung abgestützt ist.

11. Verfahren zum Steuern eines Schraubers (10) gemäß einem der Ansprüche 1 bis 10 zum Anziehen einer Schraubverbindung mit einem bestimmten Anzugsmoment, mit folgenden Schritten:
- Bereitstellen einer drehmomentabhängig auslösbaren Kupplung (20) im Antriebsstrang zwischen einem Antrieb (12) und einer Werkzeugantriebswelle (42) zum Antrieb eines Werkzeugs (24);
- Antreiben der Werkzeugantriebswelle (42) über die Kupplung (20);
- Überwachen der Kupplung (20) auf ein Auslösen;
- Abschalten des Antriebs (12) bei Auslösen der Kupplung (20);
- Bremsen des Antriebs (12);
- Einschalten des Antriebs (12) zum Nachdrehen der Kupplung (20) und
- Ausschalten des Antriebs (12) nach einem vorgegebenen Abschaltkriterium.

12. Verfahren nach Anspruch 11, bei dem der Antrieb (12) zum Nachdrehen mit einer gegenüber einer Nennleistung verminderten Leistung angetrieben wird.

13. Verfahren nach Anspruch 11 oder 12, bei dem der Antrieb (12) nach Ablauf einer bestimmten Zeitdauer nach Abschalten wieder eingeschaltet und nach Ablauf einer weiteren Zeitdauer wieder ausgeschaltet wird.

14. Verfahren nach Anspruch 11 oder 12, bei dem der Antrieb (12) nach Erreichen eines bestimmten Drehwinkels (α) ab Abschaltung des Antriebs eingeschaltet und nach Erreichen eines weiteren Drehwinkels (α) wieder ausgeschaltet wird.

## Claims

1. Screwdriver having a drive (12) which is coupled via a clutch (20), disengaging as a function of torque, to a tool drive shaft (42) for driving a tool (24), having an electronic control unit (26) for controlling the drive (12), and having a sensor (22) which is coupled to the electronic control unit (26) in order to switch off the drive (12) when the clutch (20) responds, **characterized in that** the electronic control unit (26) is designed for activating the drive (12) with a certain output, preferably with a reduced output, for a limited time after switch-off.

2. Screwdriver according to Claim 1, **characterized in that** the electronic control unit (26) has means for switching on the drive (12) and switching it off again in a time-controlled manner after disengagement of the clutch (20).

3. Screwdriver according to Claim 1, **characterized in that** an angle sensor (18, 18') is provided for detecting the rotation angle of the tool drive shaft (42), this angle sensor (18, 18') being coupled to the electronic control unit (26) in order to switch on the drive (12) and switch it off again as a function of angle after disengagement of the clutch (20).

4. Screwdriver according to one of the preceding claims, **characterized in that** the electronic control unit (26) has means for braking the drive (12) after disengagement of the clutch (20).

5. Screwdriver according to Claim 3, **characterized in that** the drive (12) comprises a motor (14) and a gear unit (16) driven by it, the angle sensor (18, 18') being designed as an angle counter which is coupled to the motor shaft (15).

6. Screwdriver according to Claim 3, **characterized in that** the drive (12) comprises a motor (14) and a gear unit (16) driven by it, the angle sensor (18, 18') being designed as an angle counter which is coupled to an output of the gear unit (16) or to the tool drive shaft (42).

7. Screwdriver according to one of the preceding claims, in which the clutch (20) is designed as a disconnect-type clutch having an adjustable disengaging torque.

8. Screwdriver according to Claim 7, **characterized in that** the disconnect-type clutch (20) has a dog ring (32) which is driven by the gear unit (16) and is coupled via first rolling elements (36) to a control ring (34), the control ring (34) being elastically preloaded against the dog ring (32).

9. Screwdriver according to Claim 8, **characterized in that** the control ring (34) is coupled to the tool drive shaft (42) in a rotationally locked but axially displaceable manner via second rolling elements (38), the rolling elements (38) being guided in axial guides (44, 46) of the control ring (34) and of the tool drive shaft (42).

10. Screwdriver according to Claim 8 or 9, **characterized in that** the dog ring (32) is rotatably mounted on a housing (11) by means of a bearing (30), in particular by means of a needle bearing, and is supported in the axial direction on one end (43) of the tool drive shaft (42) via third rolling elements (40).

11. Method of controlling a screwdriver (10) according to one of claims 1 to 10 for tightening a screwed connection with a certain tightening torque, comprising the following steps:
- providing a clutch (20), disengageable as a function of torque, in the drive line between a drive (12) and a tool drive shaft (42) for driving a tool (24);
- driving the tool drive shaft (42) via the clutch (20);
- monitoring the clutch (20) for disengagement;
- switching off the drive (12) when clutch (20) is disengaged;
- braking the drive (12);
- switching on the drive (12) for the subsequent turning of the clutch (20), and
- switching off the drive (12) according to a predetermined switch-off criterion.

12. Method according to Claim 11, in which the drive (12) is driven for subsequent turning with an output reduced compared with the rated output.

13. Method according to Claim 11 or 12, in which the drive (12) is switched on again after a certain period has expired after switch-off and is switched off again after a further period has expired.

14. Method according to Claim 11 or 12, in which the drive (12) is switched on after reaching a certain rotation angle ( ) starting from switch-off of the drive and is switched off again after reaching a further rotation angle ().

## Revendications

1. Tournevis avec un entraînement (12) qui est couplé, par l'intermédiaire d'un accouplement (20) à déclenchement en fonction du couple, à un arbre d'entraînement d'outil (42) pour entraîner un outil (24), avec une électronique de commande (26) pour commander l'entraînement (12), et avec un capteur (22) qui est couplé à l'électronique de commande (26) afin d'arrêter l'entraînement (12) en cas de réaction de l'accouplement (20), **caractérisé en ce que** l'électronique de commande (26) est conformée pour commander l'entraînement (12) après la mise à l'arrêt pendant un temps limité avec une puissance déterminée, par exemple une puissance réduite.

2. Tournevis selon la revendication 1, **caractérisé en ce que** l'électronique de commande (26) présente des moyens pour mettre en route puis arrêter l'entraînement (12) de manière commandée dans le temps après un déclenchement de l'accouplement (20).

3. Tournevis selon la revendication 1, **caractérisé en ce qu'**un capteur d'angle (18, 18') est prévu pour relever l'angle de rotation de l'arbre d'entraînement d'outil (42), qui est couplé à l'électronique de commande (26), afin de mettre en route puis arrêter l'entraînement (12) en fonction de l'angle après un déclenchement de l'accouplement (20).

4. Tournevis selon l'une des revendications précédentes, **caractérisé en ce que** l'électronique de commande (26) présente des moyens pour freiner l'entraînement (12) après un déclenchement de l'accouplement (20).

5. Tournevis selon la revendication 3, **caractérisé en ce que** l'entraînement (12) comprend un moteur (14) et un mécanisme (16) entraîné par lui, le capteur d'angle (18, 18') étant conformé en compteur d'angle qui est couplé à l'arbre moteur (15).

6. Tournevis selon la revendication 3, **caractérisé en ce que** l'entraînement (12) comprend un moteur (14) et un mécanisme (16) entraîné par lui, le capteur d'angle (18, 18') étant conformé en compteur d'angle qui est couplé à une sortie du mécanisme (16) ou à l'arbre d'entraînement d'outil (42).

7. Tournevis selon l'une des revendications précédentes, dans lequel l'accouplement (20) est conformé en accouplement de coupure avec un couple de déclenchement réglable.

8. Tournevis selon la revendication 7, **caractérisé en ce que** l'accouplement de coupure (20) présente une bague à came (32) entraînée par le mécanisme (16), qui est couplée par des premiers corps roulants (36) à une bague de commande (34), la bague de commande (34) étant précontrainte élastiquement contre la bague à came (32).

9. Tournevis selon la revendication 8, **caractérisé en ce que** la bague de commande (34) est couplée à l'arbre d'entraînement d'outil (42), par l'intermédiaire de deuxièmes corps roulants (38), d'une manière solidaire en rotation, mais mobile axialement, les corps roulants (38) étant guidés dans des guidages axiaux (44, 46) de la bague de commande (34) et de l'arbre d'entraînement d'outil (42).

10. Tournevis selon la revendication 8 ou 9, **caractérisé en ce que** la bague à cames (32) est montée rotative sur un boîtier (11) au moyen d'un palier, en particulier au moyen d'un palier à aiguilles, et est soutenue dans la direction axiale par des troisièmes corps roulants (40) à une extrémité (43) de l'arbre d'entraînement d'outil (42).

11. Procédé de commande d'un tournevis (10) selon l'une des revendications 1 à 10 afin de serrer un assemblage vissé avec un couple de serrage déterminé, comprenant les étapes suivantes :
- fourniture d'un accouplement (20) à déclenchement fonction du couple sur la ligne d'entraînement entre un entraînement (12) et un arbre d'entraînement d'outil (42) pour entraîner un outil (24) ;
- entraînement de l'arbre d'entraînement d'outil (42) par l'intermédiaire de l'accouplement (20) ;
- surveillance de l'accouplement (20) pour détecter un déclenchement ;
- arrêt de l'entraînement (12) en cas de déclenchement de l'accouplement (20) ;
- freinage de l'entraînement (12) ;
- mise en route de l'entraînement (12) pour une rotation ultérieure de l'accouplement (20) ; et
- mise à l'arrêt de l'entraînement (12) selon un critère d'arrêt prédéterminé.

12. Procédé selon la revendication 11, dans lequel pour la rotation ultérieure, l'entraînement (12) est entraîné avec une puissance réduite par rapport à une puissance nominale.

13. Procédé selon la revendication 11 ou 12, dans lequel au terme d'une période déterminée après la mise à l'arrêt, l'entraînement (12) est remis en marche, puis de nouveau arrêté au terme d'une nouvelle période.

14. Procédé selon la revendication 11 ou 12, dans lequel l'entraînement (12) est mise en marche quand on atteint un angle de rotation (α) déterminé après l'arrêt de l'entraînement, puis remis à l'arrêt quand on atteint un autre angle de rotation (α).
